(19) Europäisches Patentamt
European Patent Office
Office européen des brevets

(11) **EP 3 825 430 A1**

(12) **EUROPÄISCHE PATENTANMELDUNG**

(43) Veröffentlichungstag:
**26.05.2021 Patentblatt 2021/21**

(21) Anmeldenummer: 19210812.4

(22) Anmeldetag: **22.11.2019**

(51) Int Cl.:
*C22C 29/06* (2006.01)    *B23C 5/18* (2006.01)
*B23D 45/00* (2006.01)    *B23D 61/02* (2006.01)
*C22C 29/08* (2006.01)    *B23B 27/14* (2006.01)
*B22F 7/06* (2006.01)    *B22F 5/00* (2006.01)
*B22F 7/08* (2006.01)    *C04B 35/56* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME
KH MA MD TN**

(71) Anmelder: **Ceratizit Luxembourg Sàrl
8232 Mamer (LU)**

(72) Erfinder:
• **BERTALAN, Claudio
8232 Mamer (LU)**

• **USELDINGER, Ralph
8232 Mamer (LU)**
• **KÖSTERS, Rolf
8232 Mamer (LU)**

(74) Vertreter: **Ciesla, Dirk
Plansee Group Service GmbH
IP Department
Metallwerk-Plansee-Strasse 71
6600 Reutte (AT)**

(54) **WOLFRAMKARBID-BASIERTER HARTMETALLWERKSTOFF**

(57) Es wird ein Wolframkarbid-basierter Hartmetall-werkstoff bereitgestellt, der aufweist: Wolframkarbid mit einer mittleren Korngröße von 0,1 - 1,3 μm; 1,0 - 5,0 Gew.-% (Co + Ni), mit einem Verhältnis Co/(Co + Ni) in Gew.-% von $0{,}4 \leq$ Co/(Co + Ni) $\leq 0{,}95$; 0,1 - 1,0 Gew.-% Cr, mit einem Verhältnis von Cr zu (Co + Ni) in Gew.-% von $0{,}05 \leq$ Cr/(Co + Ni) $\leq 0{,}20$; 0,01 - 0,3 Gew.-% Mo; und 0,02 - 0,45 Gew.-% Me, mit Me = ein oder mehrere Elemente aus der Gruppe Ta, Nb, Hf und Ti, bevorzugt Ta und/oder Nb; sowie $0{,}01 \leq$ Me/(Co + Ni) $\leq 0{,}13$.

BEISPIEL 1

Fig. 7

**Beschreibung**

Die vorliegende Erfindung betrifft einen Wolframkarbid-basierten Hartmetallwerkstoff, eine Verwendung dieses Werkstoffs für ein Holzbearbeitungswerkzeug oder Umformwerkzeug, sowie ein Holzbearbeitungswerkzeug mit einem Arbeitsbereich aus diesem Hartmetallwerkstoff und ein Umformwerkzeug mit einem Arbeitsbereich aus diesem Werkstoff.

Wolframkarbid-basierte Hartmetallwerkstoffe sind Verbundwerkstoffe, bei denen zumindest überwiegend durch Wolframkarbid gebildete Hartstoffteilchen den überwiegenden Teil des Verbundwerkstoffs bilden und Zwischenräume zwischen den Hartstoffteilchen durch einen duktilen metallischen Binder gefüllt sind. Derartige Hartmetallwerkstoffe kommen seit vielen Jahren aufgrund ihrer vorteilhaften Materialeigenschaften, wie insbesondere hoher Härte in Verbindung mit guter Risszähigkeit in verschiedensten Bereichen, wie z.B. bei der Metallzerspanung, in Verschleißteilen, in Holzbearbeitungswerkzeugen, in Umformwerkzeugen, etc. zum Einsatz. Die Materialanforderungen bei der Anwendung solcher Hartmetallwerkstoffe in den verschiedenen Anwendungsbereichen sind dabei sehr unterschiedlich. Insbesondere ist bei manchen Anwendungen hauptsächlich eine hohe Härte von Bedeutung, in anderen Anwendungen eine möglichst ausgewogene Kombination aus Härte und Zähigkeit, in wieder anderen Anwendungen z.B. auch eine gute Korrosionsbeständigkeit.

Insbesondere bei der Verwendung von solchen Hartmetallwerkstoffen in Holzbearbeitungswerkzeugen und Umformwerkzeugen sind neben einer hohen Härte und einer guten Korrosionsbeständigkeit des Hartmetallwerkstoffs auch eine hohe Risszähigkeit $K_{Ic}$ und eine hohe Biegebruchfestigkeit BBF entscheidend.

Es ist Aufgabe der vorliegenden Erfindung, einen verbesserten Wolframkarbid-basierten Hartmetallwerkstoff bereitzustellen, der insbesondere für eine Verwendung in Holzbearbeitungswerkzeugen oder Umformwerkzeugen eine besonders vorteilhafte Kombination aus Härte, Korrosionsbeständigkeit, Risszähigkeit und Biegebruchfestigkeit hat, sowie ein verbessertes Holzbearbeitungswerkzeug und ein verbessertes Umformwerkzeug bereitzustellen.

Die Aufgabe wird durch einen Wolframkarbid-basierten Hartmetallwerkstoff nach Anspruch 1 gelöst. Vorteilhafte Weiterbildungen sind in den abhängigen Ansprüchen angegeben.

Der Hartmetallwerkstoff weist auf: Wolframkarbid mit einer mittleren Korngröße von 0,1 - 1,3 $\mu$m; 1,0 - 5,0 Gew.-% (Co + Ni), mit einem Verhältnis Co/(Co + Ni) in Gew.-% von $0,4 \leq$ Co/(Co + Ni) $\leq 0,95$; 0,1 - 1,0 Gew.-% Cr, mit einem Verhältnis von Cr zu (Co + Ni) in Gew.-% von $0,05 \leq$ Cr/(Co + Ni) $\leq 0,20$; 0,01 - 0,3 Gew.-% Mo; und 0,02 - 0,45 Gew.-% Me, mit Me = ein oder mehrere Elemente aus der Gruppe Ta, Nb, Hf und Ti, bevorzugt Ta und/oder Nb; sowie $0,01 \leq$ Me/(Co + Ni) $\leq 0,13$.

Der Anteil des Wolframkarbid an dem Hartmetallwerkstoff kann insbesondere bevorzugt 92 bis 98,5 Gew.-% betragen. Gew.-% (Co + Ni) bedeutet dabei den Gesamtanteil an Co und Ni in Gewichtsprozent. Auch das Verhältnis Me/(Co + Ni) ist dabei in Gewichtsprozent zu bestimmen. Der erfindungsgemäße Hartmetallwerkstoff erreicht eine vorteilhafte Kombination aus hoher Härte, guter Korrosionsbeständigkeit und gleichzeitig einer für die hohe Härte auch hohen Risszähigkeit und Biegebruchfestigkeit, was insbesondere für die Anwendung in Holzbearbeitungswerkzeugen und Umformwerkzeugen besonders vorteilhaft ist. Die vorteilhaften Eigenschaften werden dabei auf die Kombination von Co und Ni in dem angegebenen Bereich, die gezielte Beigabe von Cr und Mo in den angegebenen Bereichen, sowie die gezielte Beigabe von zumindest einem der Elemente Ti, Ta, Hf und Nb in der angegebenen Menge zurückgeführt. Der Hartmetallwerkstoff weist somit neben WC, Co, Ni, Cr und Mo zumindest eines der Elemente Ta, Nb, Hf und Ti auf, kann aber auch mehrere dieser Elemente aufweisen. Bevorzugt kann der Hartmetallwerkstoff dabei Ta, Nb oder Ta und Nb in Kombination aufweisen. Soweit im Rahmen der vorliegenden Beschreibung nichts anderes angegeben ist, beziehen sich Mengen- und Verhältnisangaben jeweils auf Gewichtsprozent der Bestandteile. Chrom kann bei einer pulvermetallurgischen Herstellung des Hartmetallwerkstoffs z.B. als reines Metall oder in Form von $Cr_3C_2$- oder $Cr_2N$-Pulver zugegeben werden. Mo kann bevorzugt in Form von $Mo_2C$-Pulver zugegeben werden, es ist jedoch z.B. auch eine Zugabe als reines Metall oder als z.B. (W, Mo)C-Mischkarbid möglich. Das bzw. die weiteren Elemente können z.B. insbesondere als Karbid MeC, also TaC, NbC, etc., oder als Mischkarbid, wie z.B. (Ta, Nb)C oder (W, Me)C, insbesondere z.B. (W, Ta)C oder z.B. (W, Ti, Ta, Nb)C, etc. zugegeben werden. Der Hartmetallwerkstoff kann bevorzugt nur die angegebene Zusammensetzung und unvermeidbare Verunreinigungen aufweisen, d.h. im Wesentlichen aus der angegebenen Zusammensetzung bestehen.

Gemäß einer Weiterbildung hat der Hartmetallwerkstoff eine mittlere Korngröße des Wolframkarbids von 0,1 - 0,8 $\mu$m, was in Bezug auf den Kompromiss aus Härte und Risszähigkeit sowie Biegebruchfestigkeit insbesondere für eine Anwendung in Holzbearbeitungswerkzeugen oder Umformwerkzeugen besonders vorteilhaft ist. Bevorzugt kann der Hartmetallwerkstoff eine mittlere Korngröße des Wolframkarbids von 0,2 - 0,5 $\mu$m haben.

Gemäß einer Weiterbildung gilt für das Verhältnis Co/(Co + Ni): $0,6 \leq$ Co/(Co + Ni) $\leq 0,9$. Insbesondere bei diesem Verhältnis wird eine gute Balance zwischen einer guten Benetzung der Wolframkarbidkörner mit dem Binder einerseits und einer hohen Korrosionsbeständigkeit sowie Risszähigkeit des Hartmetallwerkstoffs andererseits erzielt.

Gemäß einer Weiterbildung gilt für das Verhältnis Cr/(Co + Ni) in Gew.-%: $0,05 \leq$ Cr/(Co + Ni) $\leq 0,15$. In diesem Bereich ist insbesondere so viel Cr im Verhältnis zu den Haupt-Binderbestandteilen Co und Ni gegeben, dass eine hohe Härte und Korrosionsbeständigkeit erreicht werden, dabei aber gleichzeitig die Prozessparameter bei der Herstellung gegenüber üblichen Toleranzen noch hinreichend unempfindlich sind.

Gemäß einer Weiterbildung gilt für das Verhältnis von Mo zu Cr in Gew.-%: Mo/Cr < 0,5; bevorzugt Mo/Cr < 0,4. Der deutlich höhere Anteil von Cr im Verhältnis zu Mo wirkt sich positiv auf den Kompromiss zwischen Härte und Korrosionsbeständigkeit sowie Risszähigkeit und Biegebruchfestigkeit aus.

Gemäß einer Weiterbildung gilt $0,02 \leq Me/(Co + Ni) \leq 0,08$. Auch hierbei ist das Verhältnis in Gew.-% zu bestimmen. Insbesondere in diesem Bereich wirkt sich die Zugabe von einem oder mehreren Elementen von Ta, Nb, Hf und/oder Ti positiv auf die Materialeigenschaften aus. Besonders bevorzugt ist dabei, wenn für Me gilt: Me = Ta und/oder Nb.

Bevorzugt kann dabei für das Verhältnis von Me zu Cr in Gew.-% gelten: Me/Cr < 0,65. Dabei kann insbesondere Me/Cr > 0,05 sein, um einerseits einen ausreichenden Einfluss der zusätzlichen Beigabe zu erzielen, andererseits aber nachteilige Effekte zu vermeiden.

Gemäß einer Weiterbildung weist der Hartmetallwerkstoff eine Vickershärte HV10 in dem Bereich von 2050 bis 2450 auf. Insbesondere bei einer Anwendung in einem Holzbearbeitungswerkzeug oder einem Umformwerkzeug ist eine derart hohe Härte vorteilhaft. Die Vickershärte HV10 gemäß ISO 3878:1991 ("Hardmetals - Vickers hardness test") liegt dabei bevorzugt insbesondere in dem Bereich

$$HV10 = 2550 - 100 \cdot Gew.\text{-}\% \; (Co+Ni) \pm 150.$$

Gemäß einer Weiterbildung hat der Hartmetallwerkstoff eine Risszähigkeit $K_{IC}$ in dem Bereich von 7,1 bis 8,5 MPa • m$^{1/2}$. Die Messung erfolgt nach ISO 28079:2009 mit einer Prüflast (indentation load) von 10 kgf (entsprechend 98,0665 N). Die Risszähigkeit $K_{IC}$ in MPa • m$^{1/2}$ kann dabei insbesondere in dem Bereich

$$K_{IC} = 6,8 + (1/3) \cdot Gew.\text{-}\% \; (Co+Ni) \pm 0,5$$

liegen, bevorzugt in dem Bereich

$$K_{IC} = 6,8 + (1/3) \cdot Gew.\text{-}\% \; (Co+Ni) \pm 0,3.$$

Gemäß einer Weiterbildung hat der Hartmetallwerkstoff eine Biegebruchfestigkeit in dem Bereich zwischen 2560 MPa und 4230 MPa. Die Biegebruchfestigkeit wird dabei nach der Norm ISO 3327:2009 mit einem Prüfgegenstand mit zylindrischem Querschnitt (Form C) bestimmt. Die Biegebruchfestigkeit in MPa kann dabei insbesondere in dem Bereich liegen:

$$BBF = 2150 + (2500/6) \cdot Gew.\text{-}\% \; (Co+Ni) \pm 500$$

bevorzugt in dem Bereich:

$$BBF = 2150 + (2500/6) \cdot Gew.\text{-}\% \; (Co+Ni) \pm 300.$$

Die Aufgabe wird auch durch die Verwendung des Hartmetallwerkstoffs für ein Holzbearbeitungswerkzeug oder ein Umformwerkzeug nach Anspruch 11 gelöst.

Die Aufgabe wird auch durch ein Holzbearbeitungswerkzeug gemäß Anspruch 12 mit einem Arbeitsbereich, der aus einem solchen Wolframkarbid-basierten Hartmetallwerkstoff gebildet ist, gelöst.

Die Aufgabe wird auch durch ein Umformwerkzeug gemäß Anspruch 13 mit einem Arbeitsbereich, der aus einem solche Wolframkarbid-basierten Hartmetallwerkstoff gebildet ist, gelöst.

Gemäß einer Weiterbildung ist das Umformwerkzeug ein Werkzeug für die Kaltumformung, insbesondere eine Ziehmatrize zur Drahtherstellung oder ein Tiefziehwerkzeug.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:

Fig. 1:     eine schematische Darstellung eines Holzbearbeitungswerkzeugs mit einem Arbeitsbereich aus einem Hartmetallwerkstoff gemäß einer Ausführungsform;

Fig. 2:     eine vergrößerte schematische Darstellung eines Details II aus Fig. 1;

Fig. 3:     eine schematische Darstellung eines Umformwerkzeugs mit einem Arbeitsbereich aus einem Hartmetallwerkstoff gemäß einer anderen Ausführungsform;

Fig. 4:     eine schematische Aufsicht des Umformwerkzeugs aus Fig. 3;

Fig. 5:     eine schematische Querschnittsansicht des Umformwerkzeugs aus Fig. 3;

Fig. 6:     eine lichtmikroskopische Aufnahme eines Hartmetallwerkstoffs gemäß Vergleichsbeispiel 1;

Fig. 7:     eine lichtmikroskopische Aufnahme eines Hartmetallwerkstoffs gemäß Beispiel 1;

Fig.8:      eine lichtmikroskopische Aufnahme eines Hartmetallwerkstoffs gemäß Beispiel 2;

Fig. 9:     eine lichtmikroskopische Aufnahme eines Hartmetallwerkstoffs gemäß Beispiel 3; und

Fig. 10:    eine lichtmikroskopische Aufnahme eines Hartmetallwerkstoffs gemäß Beispiel 4.

AUSFÜHRUNGSFORM

Eine Ausführungsform des Wolframkarbid-basierten Hartmetallwerkstoffs wird im Folgenden zunächst allgemein beschrieben.

Der Hartmetallwerkstoff hat eine spezifische Zusammensetzung, die im Folgenden eingehender beschrieben wird.

Der Hartmetallwerkstoff besteht überwiegend aus Wolframkarbid mit einer mittleren Korngröße im Bereich von 0,1 - 1,3 $\mu$m. Die mittlere Korngröße kann bevorzugt in dem Bereich von 0,1 - 0,8 $\mu$m liegen. Besonders bevorzugt liegt die mittlere Korngröße in dem Bereich von 0,2 - 0,5 $\mu$m.

Der Anteil des Wolframkarbid an dem Hartmetallwerkstoff kann insbesondere 92 bis 98,5 Gew.-% betragen. Der Hartmetallwerkstoff weist ferner einen duktilen metallischen Binder auf. Bei der Ausführungsform besteht der metallische Binder überwiegend aus Co (Cobalt) und Ni (Nickel), wobei der Anteil in Gewichtsprozent von Co zu der Summe aus Co und Ni zwischen 0,4 und 0,95 liegt. Bevorzugt liegt der Anteil zwischen 0,6 und 0,9; d.h. bevorzugt ist der Anteil von Co an dem metallischen Binder größer als der Anteil von Ni an dem metallischen Binder.

Der Wolframkarbid-basierte Hartmetallwerkstoff weist ferner zwischen 0,1 und 1 Gew.-% Cr auf, wobei das Verhältnis von Cr zu der Summe aus Co und Ni in Gewichtsprozent derart gewählt ist, dass $0{,}05 \leq Cr/(Co + Ni) \leq 0{,}20$. Wenn der Cr-Gehalt in diesem Bereich gehalten wird, wird der gewünschte kornverfeinernde Effekt erzielt und chromhaltige Mischkarbid-Ausscheidungen können weitgehend vermieden werden. Bevorzugt kann gelten: $0{,}05 \leq Cr/(Co + Ni) \leq 0{,}15$. In diesem Fall können chromhaltige Mischkarbid-Ausscheidungen besonders zuverlässig vermieden werden, ohne die Herstellungsparameter bei der pulvermetallurgischen Herstellung in engen Toleranzbereichen halten zu müssen.

Der Hartmetallwerkstoff gemäß der Ausführungsform weist ferner zusätzlich 0,01 - 0,3 Gew.-% Mo auf. Der Mo-Gehalt ist dabei bevorzugt derart eingestellt, dass er deutlich niedriger als der Cr-Gehalt ist, bevorzugt weniger als die Hälfte des Cr-Gehalts beträgt, besonders bevorzugt weniger als 40% des Cr-Gehalts beträgt.

Erfindungsgemäß weist der Hartmetallwerkstoff ferner ein oder mehrere Elemente aus der Gruppe Ta, Nb, Hf und Ti auf, wobei deren Gesamtanteil an dem Hartwerkstoff zwischen 0,02 und 0,45 Gewichtsprozent beträgt. Das Verhältnis des Gesamtanteils von Ta, Nb, Hf und Ti im Verhältnis zum Gesamtanteil von Co und Ni beträgt zwischen 0,01 und 0,13. Besonders bevorzugt kann das Verhältnis in einem Bereich zwischen 0,02 und 0,08 liegen. Bevorzugt kann der Hartmetallwerkstoff dabei von der Gruppe Ta, Nb, Hf und Ti nur Ta und/oder Nb aufweisen, die sich besonders positiv auf die physikalischen Eigenschaften des Hartmetallwerkstoffs auswirken. Der Gesamtanteil der weiteren Elemente aus der Gruppe Ta, Nb, Hf und Ti an dem Hartmetallwerkstoff kann dabei bevorzugt deutlich geringer als der Anteil von Cr an dem Hartmetallwerkstoff sein, insbesondere kleiner als 65% des Cr-Gehalts sein.

Der Hartmetallwerkstoff gemäß der Ausführungsform wurde pulvermetallurgisch hergestellt unter Verwendung von WC-Pulver mit einer Partikelgröße (FSSS, Fisher sieve sizes) von 0,5 $\mu$m; Co-Pulver mit einer FSSS-Partikelgröße von 0,9 $\mu$m, Ni-Pulver mit einer FSSS-Partikelgröße von 2,5 $\mu$m, $Cr_3C_2$-Pulver mit einer FSSS-Partikelgröße von 1,5 $\mu$m; $Mo_2C$-Pulver mit einer FSSS-Partikelgröße von 1,35 $\mu$m; NbC-Pulver mit einer FSSS-Partikelgröße von 1,2 $\mu$m, TaC-Pulver mit einer FSSS-Partikelgröße von 0,9 $\mu$m und (Ta, Nb)C-Pulver (genauer: $(Ta_{0,6}, Nb_{0,4})$C-Pulver) mit einer FSSS-Partikelgröße von 1,2 $\mu$m. Die Herstellung erfolgte durch Mischen der jeweiligen Ausgangspulver mit einem Lösungsmittel in einer Kugelmühle bzw. einem Attritor und anschließendes Sprühtrocknen in der üblichen Weise. Das resultierende Granulat wurde gepresst und in die gewünschte Form gebracht und wurde anschließend in herkömmlicher Weise gesintert, um den Hartmetallwerkstoff zu erhalten. Aus dem Hartmetallwerkstoff wurden Ziehmatrizen für Stahldraht als Arbeitsbereich für ein Umformwerkzeug und Sägezähne als Arbeitsbereich für ein Holzbearbeitungswerkzeug in Form einer Kreissäge gefertigt. Die Bestimmung der mittleren Korngröße der Wolframkarbidkörner in dem Hartmetallwerkstoff erfolgte gemäß der "equivalent circle diameter (ECD)"-Methode aus EBSD (electron backscatter diffraction)-Aufnahmen. Diese Methode ist z.B. in "Development of a quantitative method for grain size measurement using EBSD"; Master of Science Thesis, Stockholm 2012, von Frederik Josefsson beschrieben.

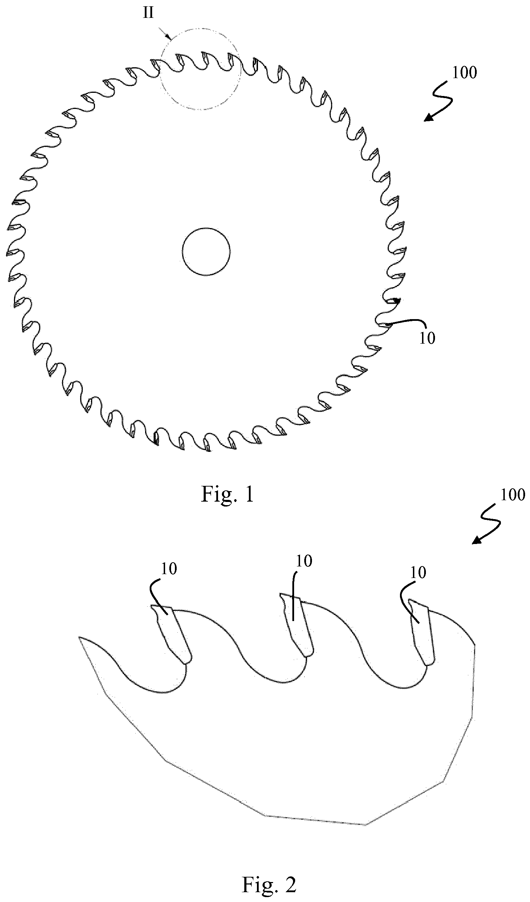

Eine erste Ausführungsform eines Holzbearbeitungswerkzeugs 100 mit einem Arbeitsbereich 10, der aus dem Wolframkarbid-basierten Hartmetallwerkstoff gebildet ist, wie er oben beschrieben wurde, ist in den Fig. 1 und Fig. 2 dargestellt.

Bei der konkret dargestellten Ausführungsform ist das Holzbearbeitungswerkzeug 100 ein Kreissägeblatt, das eine Mehrzahl von Sägezähnen aufweist, die jeweils einen Arbeitsbereich 10 bilden, der mit dem zu bearbeitenden Holz in Eingriff kommt. Der Arbeitsbereich 10 aus dem Hartmetallwerkstoff in Form des Sägezahns ist dabei jeweils materialschlüssig, z.B. über eine Lötverbindung, mit dem Grundkörper 11 des Kreissägeblattes verbunden, der z.B. in der üblichen Weise aus Stahl gebildet sein kann.

Obwohl in Fig. 1 und Fig. 2 beispielhaft ein Kreissägeblatt als Holzbearbeitungswerkzeug dargestellt ist, kann der Wolframkarbid-basierte Hartmetallwerkstoff auch als Arbeitsbereich an anderen Holzbearbeitungswerkzeugen zum Einsatz kommen.

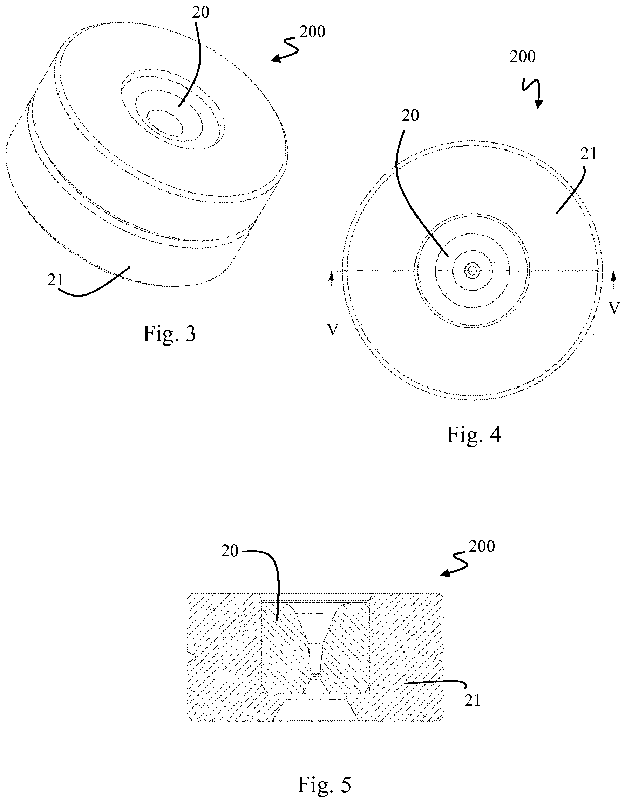

Eine Ausführungsform eines Umformwerkzeugs 200 mit einem Arbeitsbereich 20, der aus dem Wolframkarbid-basierten Hartmetallwerkstoff gebildet ist, wie er oben beschrieben wurde, ist in den Fig. 3 bis Fig. 5 dargestellt.

Bei der in den Fig. 3 bis Fig. 5 konkret dargestellten Ausführungsform ist das Umformwerkzeug 200 ein Werkzeug für die Kaltumformung, insbesondere eine Ziehmatrize zur Drahtherstellung, und der Arbeitsbereich 20 ist ein Ziehstein, der unmittelbar mit dem zu bearbeitenden Material, wie z.B. Stahldraht, in Kontakt tritt. Der Arbeitsbereich 20 aus dem Hartmetallwerkstoff ist in einem Gehäuse 21 aufgenommen, das z.B. aus Stahl gefertigt sein kann.

BEISPIELE

VERGLEICHSBEISPIEL 1

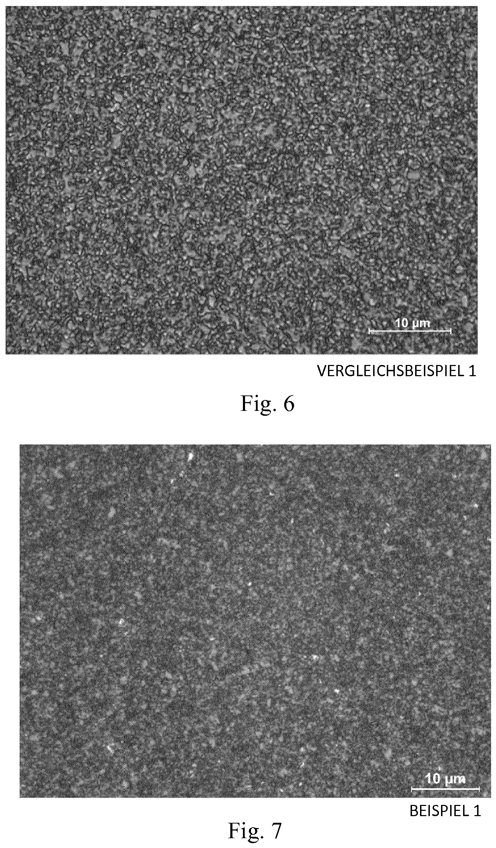

Als Vergleichsbeispiel wurde ein Wolframkarbid-basierter Hartmetallwerkstoff in dem oben angegebenen pulvermetallurgischen Verfahren mit der folgenden Zusammensetzung hergestellt: 2,25 Gew.-% Co; 0,75 Gew.-% Ni; 0,35 Gew.-% Cr (entspricht 0,4 Gew.-% $Cr_3C_2$ als Ausgangsmaterial); 0,047 Gew.-% Mo (entspricht 0,05 Gew.-% $Mo_2C$ als Ausgangsmaterial), Rest WC und unvermeidliche Verunreinigungen. Der WC-Anteil betrug somit ca. 96,55 Gew.-%. Eine lichtmikroskopische Aufnahme des Gefüges dieses Hartmetallwerkstoffs ist in Fig. 6 gezeigt.

Bei der Herstellung wurde die Kohlenstoffbilanz so eingestellt, dass der resultierende Hartmetallwerkstoff zumindest im Wesentlichen frei von $\eta$-Phase, d.h. von unerwünschten $(W_x, Co_y)_zC$-Mischphasen, und im Wesentlichen frei von Kohlenstoffausscheidungen ist. Im Wesentlichen frei von $\eta$-Phase bedeutet in diesem Zusammenhang, dass zwischen 0 und maximal 0,5 Vol.-% $\eta$-Phase vorliegen.

Die mittlere Korngröße der Wolframkarbidkörner lag im Bereich 0,2-0,5 $\mu$m. Es wurden eine Vickershärte HV10 von 2140, eine Risszähigkeit $K_{IC}$ von 7,8 MPa $\cdot$ m$^{1/2}$ und eine Biegebruchfestigkeit von 3200 MPa gemessen.

BEISPIEL 1

Ein Wolframkarbid-basierter Hartmetallwerkstoff wurde in dem oben beschriebenen pulvermetallurgischen Herstellungsverfahren mit der folgenden Zusammensetzung hergestellt: 2,7 Gew.-% Co; 0,9 Gew.-% Ni; 0,45 Gew.-% Cr (entspricht 0,52 Gew.-% $Cr_3C_2$ als Ausgangsmaterial); 0,047 Gew.-% Mo (entspricht 0,05 Gew.-% $Mo_2C$ als Ausgangsmaterial) und 0,094 Gew.-% Ta (entspricht 0,1 Gew.-% TaC als Ausgangsmaterial), Rest WC und unvermeidbare Verunreinigungen. Der Anteil des WC betrug also ca. 95,73 Gew.-%. Der Gehalt an Co + Ni betrug 3,6 Gew.-%, mit einem Verhältnis Co/(Co + Ni) von 0,75. Das Verhältnis Cr/(Co + Ni) betrug 0,125. Das Verhältnis Me/(Co + Ni) betrug 0,026; wobei in diesem Beispiel 1 galt: Me = Ta. Eine lichtmikroskopische Aufnahme des Gefüges dieses Hartmetallwerkstoffs ist in Fig. 7 gezeigt.

Auch bei diesem Beispiel wurde die Kohlenstoffbilanz bei der Herstellung so eingestellt, dass der resultierende Hartmetallwerkstoff zumindest im Wesentlichen frei von $\eta$-Phase, d.h. von unerwünschten $(W_x, Co_y)_zC$-Mischphasen, und im Wesentlichen frei von Kohlenstoffausscheidungen ist.

Die mittlere Korngröße der Wolframkarbidkörner in dem Hartmetallwerkstoff lag in dem Bereich zwischen 0,2 und 0,5 $\mu$m. Die Vickershärte HV10 wurde (gemäß ISO 3878:1991) ermittelt und betrug 2145. Ferner wurde die Risszähigkeit $K_{IC}$ wie oben beschrieben ermittelt und betrug 8,0 MPa $\cdot$ m$^{1/2}$. Die Ermittlung der Biegebruchfestigkeit nach dem oben angegebenen Verfahren betrug 3650 MPa.

Es ist somit ersichtlich, dass der Wolframkarbid-basierte Hartmetallwerkstoff aus Beispiel 1 gegenüber dem Hartmetallwerkstoff aus Vergleichsbeispiel 1 bei vergleichbarer Härte HV10 sowohl eine höhere Risszähigkeit $K_{IC}$ als auch eine höhere Biegebruchfestigkeit aufweist.

BEISPIEL 2

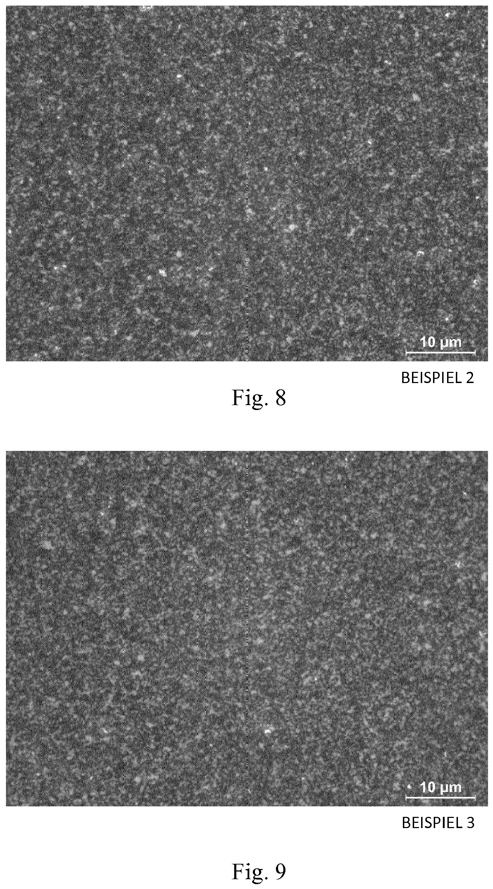

Ein Wolframkarbid-basierter Hartmetallwerkstoff wurde in dem oben beschriebenen pulvermetallurgischen Herstellungsverfahren mit der folgenden Zusammensetzung hergestellt: 3,15 Gew.-% Co; 1,05 Gew.-% Ni; 0,83 Gew.-% Cr (entspricht 0,96 Gew.-% $Cr_3C_2$ als Ausgangsmaterial); 0,132 Gew.-% Mo (entspricht 0,14 Gew.-% $Mo_2C$ als Ausgangsmaterial); 0,188 Gew.-% Ta (entspricht 0,2 Gew.-% TaC als Ausgangsmaterial); Rest WC und unvermeidliche Verunreinigungen. Der Anteil des WC betrug somit ca. 94,50 Gew.-%. Der Gehalt an Co + Ni betrug 4,2 Gew.-%, mit einem Verhältnis Co/(Co + Ni) von 0,75. Das Verhältnis Cr/(Co + Ni) betrug 0,198. Das Verhältnis Me/(Co + Ni) betrug 0,045; wobei auch in diesem Beispiel 2 galt: Me = Ta. Eine lichtmikroskopische Aufnahme des Hartmetallwerkstoffs ist in Fig. 8 gezeigt.

Auch bei diesem Beispiel wurde die Kohlenstoffbilanz so eingestellt, dass der Hartmetallwerkstoff im Wesentlichen frei von $\eta$-Phase und frei von Kohlenstoffausscheidungen war.

Die mittlere Korngröße der Wolframkarbidkörner lag im Bereich 0,2-0,5 $\mu$m. Es wurden eine Vickershärte HV10 von 2180, eine Risszähigkeit $K_{IC}$ von 8,1 MPa • $m^{1/2}$ und eine Biegebruchfestigkeit von 3800 MPa gemessen.

Es ist ersichtlich, dass der Hartmetallwerkstoff aus Beispiel 2 gegenüber dem Vergleichsbeispiel 1 bei höherer Härte HV10 sowohl eine höhere Risszähigkeit $K_{IC}$ als auch eine höhere Biegebruchfestigkeit aufweist.

BEISPIEL 3

Ein Wolframkarbid-basierter Hartmetallwerkstoff wurde in dem oben beschriebenen pulvermetallurgischen Herstellungsverfahren mit der folgenden Zusammensetzung hergestellt: 2,7 Gew.-% Co; 0,9 Gew.-% Ni; 0,45 Gew.-% Cr (entspricht 0,52 Gew.-% $Cr_3C_2$ als Ausgangsmaterial); 0,094 Gew.-% Mo (entspricht 0,1 Gew.-% $Mo_2C$ als Ausgangsmaterial) und 0,177 Gew.-% Nb (entspricht 0,2 Gew.-% NbC als Ausgangsmaterial), Rest WC und unvermeidbare Verunreinigungen. Der Anteil des WC betrug also ca. 95,58 Gew.-%. In diesem Beispiel 3 war also Me = Nb. Eine lichtmikroskopische Aufnahme des Hartmetallwerkstoffs ist in Fig. 9 gezeigt.

Auch bei diesem Beispiel wurde die Kohlenstoffbilanz so eingestellt, dass der Hartmetallwerkstoff im Wesentlichen frei von $\eta$-Phase und frei von Kohlenstoffausscheidungen war.

Die mittlere Korngröße der Wolframkarbidkörner lag im Bereich 0,2-0,5 $\mu$m. Es wurden eine Vickershärte HV10 = 2235, eine Risszähigkeit $K_{IC}$ von 7,9 MPa • $m^{1/2}$ und eine Biegebruchfestigkeit von 3600 MPa gemessen.

Es ist ersichtlich, dass der Hartmetallwerkstoff aus Beispiel 3 gegenüber dem Vergleichsbeispiel 1 bei deutlich höherer Härte HV10 sowohl eine höhere Risszähigkeit $K_{IC}$ als auch eine höhere Biegebruchfestigkeit aufweist.

BEISPIEL 4

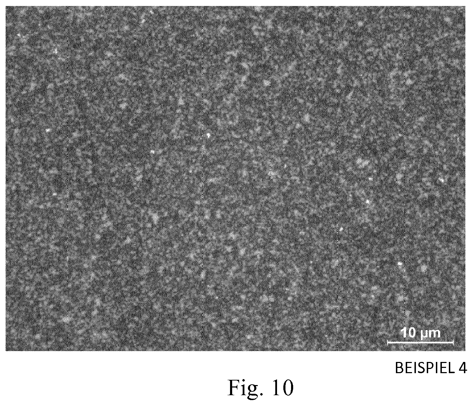

Ein Wolframkarbid-basierter Hartmetallwerkstoff wurde in dem oben beschriebenen pulvermetallurgischen Herstellungsverfahren mit der folgenden Zusammensetzung hergestellt: 2,7 Gew.-% Co; 0,9 Gew.-% Ni; 0,45 Gew.-% Cr (entspricht 0,52 Gew.-% $Cr_3C_2$ als Ausgangsmaterial); 0,094 Gew.-% Mo (entspricht 0,10 Gew.-% $Mo_2C$ als Ausgangsmaterial), 0,113 Gew.-% Ta (entspricht 0,2 Gew.-% (Ta, Nb)C als Ausgangsmaterial) und 0,071 Gew.-% Nb (entspricht 0,2 Gew.-% (Ta, Nb)C als Ausgangsmaterial), Rest WC und unvermeidbare Verunreinigungen. Der Anteil des WC betrug also ca. 95,58 Gew.-%. Der Gehalt an Co + Ni betrug 3,6 Gew.-%, mit einem Verhältnis Co/(Co + Ni) von 0,75. Das Verhältnis Cr/(Co + Ni) betrug 0,125. Das Verhältnis Me/(Co + Ni) betrug 0,051; wobei in diesem Beispiel 4 galt: Me = Ta + Nb. Eine lichtmikroskopische Aufnahme des Gefüges dieses Hartmetallwerkstoffs ist in Fig. 10 gezeigt.

Auch bei diesem Beispiel wurde die Kohlenstoffbilanz so eingestellt, dass der Hartmetallwerkstoff im Wesentlichen frei von $\eta$-Phase und frei von Kohlenstoffausscheidungen war.

Die mittlere Korngröße der Wolframkarbidkörner in dem Hartmetallwerkstoff lag in dem Bereich zwischen 0,2 und 0,5 $\mu$m. Die Vickershärte HV10 wurde (gemäß ISO 3878:1991) ermittelt und betrug 2220. Ferner wurde die Risszähigkeit $K_{IC}$ wie oben beschrieben ermittelt und betrug 7,9 MPa • $m^{1/2}$. Die Ermittlung der Biegebruchfestigkeit nach dem oben angegebenen Verfahren betrug 3500 MPa.

Es ist ersichtlich, dass der Hartmetallwerkstoff aus Beispiel 4 gegenüber dem Vergleichsbeispiel 1 bei deutlich höherer Härte HV10 sowohl eine höhere Risszähigkeit $K_{IC}$ als auch eine höhere Biegebruchfestigkeit aufweist.

**Patentansprüche**

1. Wolframkarbid-basierter Hartmetallwerkstoff, aufweisend:
   Wolframkarbid mit einer mittleren Korngröße von 0,1 - 1,3 $\mu$m;

   1,0 - 5,0 Gew.-% (Co + Ni), mit einem Verhältnis Co/(Co + Ni) in Gew.-% von $0,4 \leq$ Co/(Co + Ni) $\leq 0,95$;

0,1 - 1,0 Gew.-% Cr, mit einem Verhältnis von Cr zu (Co + Ni) in Gew.-% von $0,05 \leq Cr/(Co + Ni) \leq 0,20$;
0,01 - 0,3 Gew.-% Mo; und
0,02 - 0,45 Gew.-% Me, mit Me = ein oder mehrere Elemente aus der Gruppe Ta, Nb, Hf und Ti, bevorzugt Ta und/oder Nb; sowie $0,01 \leq Me/(Co + Ni) \leq 0,13$.

2. Wolframkarbid-basierter Hartmetallwerkstoff nach Anspruch 1, mit einer mittleren Korngröße des Wolframkarbids von 0,1 - 0,8 $\mu$m, bevorzugt von 0,2 - 0,5 $\mu$m.

3. Wolframkarbid-basierter Hartmetallwerkstoff nach Anspruch 1 oder 2, wobei $0,6 \leq Co/(Co + Ni) \leq 0,9$.

4. Wolframkarbid-basierter Hartmetallwerkstoff nach einem der vorangehenden Ansprüche, wobei $0,05 \leq Cr/(Co + Ni) \leq 0,15$.

5. Wolframkarbid-basierter Hartmetallwerkstoff nach einem der vorangehenden Ansprüche, wobei für das Verhältnis von Mo zu Cr in Gew.-% gilt: Mo/Cr < 0,5; bevorzugt Mo/Cr < 0,4.

6. Wolframkarbid-basierter Hartmetallwerkstoff nach einem der vorangehenden Ansprüche, wobei $0,02 \leq Me/(Co + Ni) \leq 0,08$.

7. Wolframkarbid-basierter Hartmetallwerkstoff nach einem der vorangehenden Ansprüche, wobei für das Verhältnis von Me zu Cr in Gew.-% gilt: Me/Cr < 0,65.

8. Wolframkarbid-basierter Hartmetallwerkstoff nach einem der vorangehenden Ansprüche mit einer Härte HV10 in dem Bereich gemäß der Gleichung:

$$HV10 = 2550 - 100 \cdot \text{Gew.-\% (Co+Ni)} \pm 150.$$

9. Wolframkarbid-basierter Hartmetallwerkstoff nach einem der vorangehenden Ansprüche mit einer Risszähigkeit $K_{IC}$ in MPa $\cdot$ m$^{1/2}$ in dem Bereich

$$K_{IC} = 6,8 + (1/3) \cdot \text{Gew.-\% (Co+Ni)} \pm 0,5.$$

10. Wolframkarbid-basierter Hartmetallwerkstoff nach einem der vorangehenden Ansprüche mit einer Biegebruchfestigkeit BBF in MPa in dem Bereich:

$$BBF = 2150 + (2500/6) \cdot \text{Gew.-\% (Co+Ni)} \pm 500.$$

11. Verwendung des Hartmetallwerkstoffs für ein Holzbearbeitungswerkzeug oder ein Umformwerkzeug.

12. Holzbearbeitungswerkzeug mit einem Arbeitsbereich, der aus einem Wolframkarbid-basierten Hartmetallwerkstoff nach einem der Ansprüche 1 bis 10 gebildet ist.

13. Umformwerkzeug mit einem Arbeitsbereich, der aus einem Wolframkarbid-basierten Hartmetallwerkstoff nach einem der Ansprüche 1 bis 10 gebildet ist.

14. Umformwerkzeug nach Anspruch 13, wobei das Umformwerkzeug ein Werkzeug für die Kaltumformung, insbesondere eine Ziehmatrize zur Drahtherstellung oder ein Tiefziehwerkzeug, ist.

II

100

10

Fig. 1

100

10          10          10

Fig. 2

Fig. 3

Fig. 4

Fig. 5

VERGLEICHSBEISPIEL 1

Fig. 6

BEISPIEL 1

Fig. 7

BEISPIEL 2

Fig. 8

BEISPIEL 3

Fig. 9

BEISPIEL 4

Fig. 10

Europäisches Patentamt

European Patent Office

Office européen des brevets

**EUROPÄISCHER RECHERCHENBERICHT**

Nummer der Anmeldung

EP 19 21 0812

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2002/059849 A1 (PEREZ FRANCISCO FERNANDEZ [ES] ET AL) 23. Mai 2002 (2002-05-23) | 11 | INV. C22C29/06 B23C5/18 |
| Y | * Absätze [0003], [0016] - [0017]; Anspruch 6; Beispiele 1,B,C * | 1-7,13, 14 | B23D45/00 B23D61/02 |
| A | | 9,10 | C22C29/08 B23B27/14 |
| | ----- | | B22F7/06 |
| X | WO 2019/096539 A1 (CERATIZIT LUXEMBOURG S A R L [LU]) 23. Mai 2019 (2019-05-23) | 11 | |
| Y | * Zusammenfassung; Beispiel 4 * | 1-7, | ADD. |
| | * Seite 1, Zeilen 6-10; Abbildung 6 * | 12-14 | B22F5/00 |
| A | * Seite 3, Zeilen 11-17 * | 9,10 | B22F7/08 |
| | ----- | | C04B35/56 |
| X | EP 1 803 830 A1 (SUMITOMO ELECTRIC INDUSTRIES [JP]; SUMITOMO ELEC HARDMETAL CORP [JP]) 4. Juli 2007 (2007-07-04) | 11 | |
| Y | * Absätze [0001], [0005], [0019]; Beispiele 1-3; Tabelle 1 * | 1-8, 12-14 | |
| A | | 9,10 | |
| | ----- | | **RECHERCHIERTE SACHGEBIETE (IPC)** |
| Y | US 6 086 650 A (CARPENTER MICHAEL JOHN [GB]) 11. Juli 2000 (2000-07-11) | 1-8, 12-14 | |
| A | * Spalte 1, Zeilen 19-23; Beispiele 1,3 * * Zusammenfassung * | 9,10 | C22C B28D B23G B22F B23C B23D B23B C04B |
| | ----- | | |
| T | Hv10 Hra: "Rockwell A to Vickers HV30 Hardness", 790 780 83.3 1260 1250 88.9 1730 1700 92.5 800 790 83.4 1270 1260 89.1 1740 1710 92.6 810 800 83.6 1280 1270 89.2 1750 1720 92.6 820 810 83, 1. Januar 1810 (1810-01-01), XP055697352, Gefunden im Internet: URL:https://generalcarbide.com/assets/pdf/ GCVickersHardness.pdf | 8 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 20. Mai 2020 | Aliouane, Nadir |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 21 0812

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-05-2020

| Im Recherchenbericht angeführtes Patentdokument | Datum der Veröffentlichung | Mitglied(er) der Patentfamilie | Datum der Veröffentlichung |
|---|---|---|---|
| US 2002059849 A1 | 23-05-2002 | AT 284978 T | 15-01-2005 |
| | | DE 60107870 T2 | 19-05-2005 |
| | | EP 1327007 A1 | 16-07-2003 |
| | | ES 2228953 T3 | 16-04-2005 |
| | | US 2002059849 A1 | 23-05-2002 |
| | | WO 0227054 A1 | 04-04-2002 |
| WO 2019096539 A1 | 23-05-2019 | AT 16111 U1 | 15-01-2019 |
| | | WO 2019096539 A1 | 23-05-2019 |
| EP 1803830 A1 | 04-07-2007 | CN 1950529 A | 18-04-2007 |
| | | EP 1803830 A1 | 04-07-2007 |
| | | IL 178268 A | 30-12-2010 |
| | | JP 3762777 B1 | 05-04-2006 |
| | | JP 2006117974 A | 11-05-2006 |
| | | KR 20070060047 A | 12-06-2007 |
| | | TW 200626731 A | 01-08-2006 |
| | | US 2008276544 A1 | 13-11-2008 |
| | | WO 2006043421 A1 | 27-04-2006 |
| US 6086650 A | 11-07-2000 | AT 251676 T | 15-10-2003 |
| | | DE 69911972 T2 | 19-05-2004 |
| | | EP 1099001 A1 | 16-05-2001 |
| | | ES 2205852 T3 | 01-05-2004 |
| | | NO 331143 B1 | 24-10-2011 |
| | | PT 1099001 E | 27-02-2004 |
| | | RU 2218439 C2 | 10-12-2003 |
| | | US 6086650 A | 11-07-2000 |
| | | WO 0000655 A1 | 06-01-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **FREDERIK JOSEFSSON.** Development of a quantitative method for grain size measurement using EBSD. *Master of Science Thesis,* 2012